# EUROPEAN PATENT APPLICATION

(11) **EP 4 726 977 A1**
(43) Date of publication of application: **15.04.2026**
(21) Application number: 23941455.0
(22) Date of filing: 12.06.2023
(51) Int. Cl.: H02K 11/33

(54) **MOTOR CONTROL APPARATUS, ELECTRICAL POWER STEERING DEVICE, AND VEHICLE**

(71) Applicant: Mitsubishi Electric Mobility Corporation, Tokyo 100-8310 (JP)
(72) Inventor: FUNAKOSHI Masayuki, Tokyo 100-8310 (JP); MORITA Hideki, Tokyo 100-8310 (JP); TAKAHASHI Tatsuya, Tokyo 100-8310 (JP); KANEKO Akira, Tokyo 102-0073 (JP)
(74) Representative: Hoffmann Eitle
(86) International application number: PCT/JP2023/021660
(87) International publication number: WO 2024/257143

(57) **Abstract**

Provided is a motor control apparatus including: an electric motor; and a control device, in which the control device includes a conductive motor case, an electronic circuit substrate, a connector, and a conductive cover, the electronic circuit substrate includes a motor drive circuit and a motor control circuit, the connector includes a power fitting portion and a signal fitting portion, at least one opening portion through which the power fitting portion and the signal fitting portion are insertable is provided **in** the cover, a first waterproof member is provided between the motor case and the cover, a second waterproof member is provided between a portion of the cover surrounding the opening portion and the connector, and the electronic circuit substrate and the connector are disposed in a sealed space defined by the cover, the first waterproof member, the second waterproof member, and the motor case.

## Description

### Technical Field

The present disclosure relates to a motor control apparatus, an electric power steering device, and a vehicle.

### Background Art

An electric power steering device mounted on a vehicle such as an automobile includes a motor control apparatus in which an electric motor that assists steering of a steering wheel and a controller that controls the electric motor are integrated. The motor control apparatus includes a substrate on which an electric component for driving and controlling a motor is mounted, an input and output connector for inputting and outputting power and a signal to and from an external device, and a motor case and a cover that accommodate an electric motor and the substrate. The electric motor includes a winding, a motor terminal for causing a current to flow through the winding, and a rotor that rotates in a case where the current flows through the winding.

Various electronic devices are mounted on an automobile in addition to a propulsion system such as an engine. In order to realize a reduction in weight and size of the automobile, a reduction in size of each electronic device is required. A reduction in size of the electric power steering device is also required, but a reduction in size of the motor control apparatus requires a reduction in size of a housing and a high density of components mounted on the substrate.

In the related art, in order to reduce the size of the motor control apparatus, an electric motor control apparatus (Patent Document 1) in which fitting portions of external connectors are exposed on a side opposite to the electric motor, and the external connectors are moved closer to a center side of the electric motor and the electric motor control apparatus is known.

### Citation List

### Patent Documents

Patent Document 1: Japanese Unexamined Patent Application, First Publication No. 2017-158223

### Summary of Invention

### Problem to be Solved by the Invention

The motor control apparatus is used in, for example, an electric power steering device mounted on a vehicle such as an automobile. The vehicle is exposed to an environment such as rain, snow, or car washing. Therefore, in a case where the motor control apparatus is mounted in an engine room, water may intrude into the motor control apparatus from the environment and cause a short-circuit failure. Therefore, a waterproof function is required for the motor control apparatus in order to prevent water from intruding into the motor control apparatus.

As a method of providing the waterproof function to the motor control apparatus, it is known to use a waterproof member as in Patent Document 1. In order to obtain an adhesive strength with which the waterproof member is not peeled off due to a temperature cycle or vibration, it is necessary to provide a sufficient adhesive margin to widen the adhesive area of the waterproof member. However, connector fitting portions in Patent Document 1 are disposed in a row at an end portion of a control substrate. Therefore, in a case where a sufficient adhesive margin is provided, there is a problem that dimensions of the motor control apparatus are increased in a direction orthogonal to a motor shaft. There are a large number of devices and wiring lines in the vehicle, and the dimensions of the motor control apparatus are strictly defined at the time of development (hereinafter, the dimensions of the motor control apparatus defined at the time of development will be referred to as specified dimensions).

The present disclosure has been made in consideration of such circumstances, and an object of the present disclosure is to solve a problem of providing a motor control apparatus with a waterproof function while satisfying the specified dimensions of the motor control apparatus in the motor control apparatus, an electric power steering device, and a vehicle.

### Means to Solve the Problem

In order to solve the above-described problem, according to a first aspect of the present disclosure, there is provided a motor control apparatus including: an electric motor; a control device configured to control driving of the electric motor and is integrated with the electric motor, in which the control device includes a conductive motor case, an electronic circuit substrate, a connector, and a conductive cover, the motor case includes an attachment portion configured to fix the motor case to the electronic circuit substrate and the connector, the electronic circuit substrate includes a motor drive circuit on which a plurality of semiconductor switching elements configured to control a current of the electric motor are mounted, and a motor control circuit on which a microcomputer configured to generate a drive signal for driving the semiconductor switching elements is mounted, the connector is electrically connected to an external device and includes a power fitting portion and a signal fitting portion that are fitted to the external device, the cover is attached to the motor case to cover the electronic circuit substrate, the power fitting portion and the signal fitting portion are individually provided at different positions on the connector, at least one opening portion through which the power fitting portion and the signal fitting portion are insertable is provided in the cover, a first waterproof member is provided between the motor case and the cover, a second waterproof member is provided between a portion of the cover surrounding the opening portion and the connector, and the electronic circuit substrate and the connector are disposed in a sealed space defined by the cover, the first waterproof member, the second waterproof member, and the motor case in a state in which the cover is attached to the motor case via the first waterproof member and the second waterproof member.

In order to solve the above-described problem, according to a second aspect of the present disclosure, there is provided an electric power steering device including the motor control apparatus according to the first aspect.

In order to solve the above-described problem, according to a third aspect of the present disclosure, there is provided a vehicle including: a wheel; and the electric power steering device according to the second aspect, in which the motor control apparatus of the electric power steering device is disposed in a vicinity of the wheel.

### Effects of the Invention

In the motor control apparatus, the electric power steering device, and the vehicle according to the present disclosure, a connector fitting portion can be divided into a power fitting portion and a signal fitting portion, and the degree of freedom in disposition of the fitting portion of the connector can be provided. Accordingly, it is possible to provide an adhesive margin portion for securing adhesive strength of the waterproof members between the portion of the cover surrounding the opening portion and the connector, and it is possible to provide the motor control apparatus with a waterproof function while satisfying specified dimensions of the motor control apparatus.

### Brief Description of Drawings

[FIG. 1] An exploded perspective view representing a motor control apparatus according to Embodiment 1 of the present disclosure.
[FIG. 2] An assembly diagram representing a motor control apparatus according to Embodiment 2 of the present disclosure.
[FIG. 3] An assembly diagram representing a motor control apparatus according to Embodiment 3 of the present disclosure.
[FIG. 4] An assembly diagram representing a motor control apparatus according to Embodiment 4 of the present disclosure.
[FIG. 5] An exploded perspective view representing a motor control apparatus according to Embodiment 5 of the present disclosure.
[FIG. 6] An exploded perspective view representing a motor control apparatus according to Embodiment 6 of the present disclosure.
[FIG. 7] An exploded perspective view representing a motor control apparatus according to Embodiment 7 of the present disclosure.
[FIG. 8] An external view representing the motor control apparatuss of Embodiments 1 to 7 of the present disclosure.

### Description of Embodiments

Hereinafter, each of the embodiments of the present disclosure will be described with reference to the drawings. Note that the same reference numerals in the drawings denote the same or equivalent portions and members.

### (Embodiment 1)

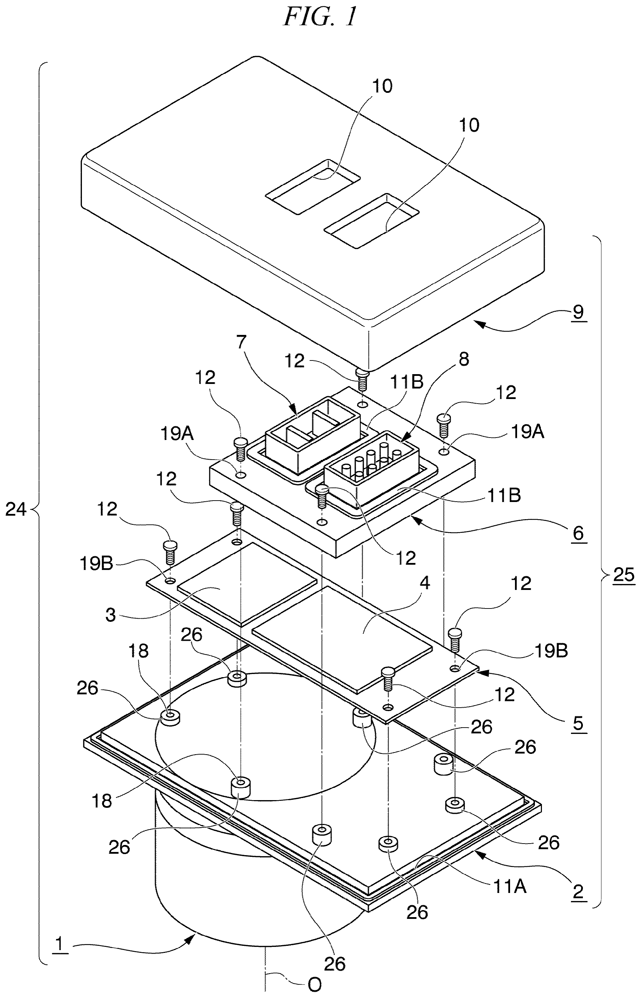

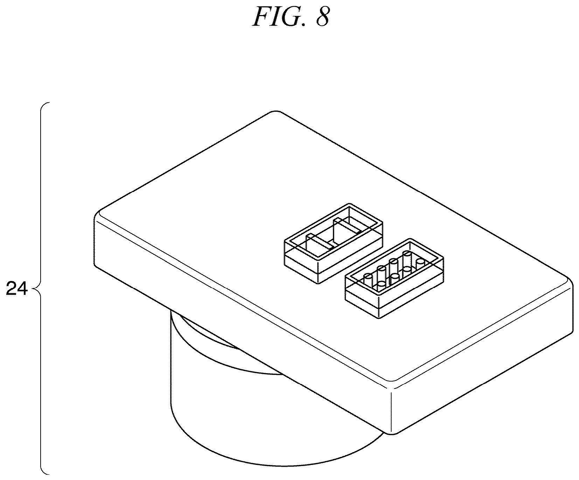

FIG. 1 is an exploded perspective view showing a motor control apparatus 24 according to Embodiment 1 of the present disclosure. FIG. 8 is an external view showing the motor control apparatus 24 of Embodiment 1. In FIG. 1, the motor control apparatus 24 includes an electric motor 1 and a control device 25 that controls driving of the electric motor 1. The electric motor 1 and the control device 25 are integrated with each other. The control device 25 is disposed adjacent to the electric motor 1 in a direction in which a rotational axis O of the electric motor 1 extends. Hereinafter, a direction in which the rotational axis O of the electric motor 1 extends will be referred to as an axial direction O.

The control device 25 includes a conductive motor case 2, an electronic circuit substrate 5, a connector 6, and a conductive cover 9. The conductive motor case 2, the electronic circuit substrate 5, the connector 6, and the cover 9 are disposed in this order from the electric motor 1 toward a side spaced apart from the electric motor 1 in the axial direction O.

The motor case 2 is formed in a plate shape and is formed in a rectangular shape when viewed from the axial direction O. The motor case 2 is adjacent to the electric motor 1 in the axial direction O. When the motor case 2 is viewed in the axial direction O, a notch is formed over the entire periphery of an edge, which is far from the electric motor 1, in an outer peripheral edge of the motor case 2. In addition, a first waterproof member 11A is provided over the entire periphery inside the notch. The first waterproof member 11A is formed of a material having a waterproof function. Examples of the material having the waterproof function include rubber.

The electronic circuit substrate 5 is formed in a plate shape and is formed in a rectangular shape when viewed from the axial direction O. The electronic circuit substrate 5 includes a motor drive circuit 3 and a motor control circuit 4 that are disposed on a surface facing the connector 6.

The connector 6 is formed in a rectangular shape when viewed from the axial direction O. The connector 6 includes a power fitting portion 7 and a signal fitting portion 8. The connector 6 includes a plate-shaped base portion, and the power fitting portion 7 and the signal fitting portion 8 are erected from a surface of the base portion facing the cover 9. The power fitting portion 7 and the signal fitting portion 8 are individually provided at different positions of the connector 6.

A second waterproof member 11B is provided on a surface of the connector 6 facing the cover 9 to surround each of the power fitting portion 7 and the signal fitting portion 8. The second waterproof member 11B is formed of a material having a waterproof function. The material of the second waterproof member 11B may be the same as or different from that of the first waterproof member 11A.

The cover 9 is attached to the motor case 2 via the first waterproof member 11A and the second waterproof member 11B. In this state, the electronic circuit substrate 5 and the connector 6 are disposed in a sealed space defined by the motor case 2, the cover 9, the first waterproof member 11A, and the second waterproof member 11B.

The cover 9 is attached to the motor case 2 to cover the electronic circuit substrate 5. The cover 9 includes a plate-shaped member and a peripheral wall that is provided to be erected in a direction approaching the electric motor 1 in the axial direction O from an entire peripheral edge of the plate-shaped member. The cover 9 is formed in a rectangular shape when viewed from the axial direction O. At least one opening portion 10 through which the power fitting portion 7 and the signal fitting portion 8 can be inserted is formed in the cover 9. In the present embodiment, two opening portions 10 are provided in the cover 9, and each of the power fitting portion 7 and the signal fitting portion 8 is inserted into each opening portion 10 of the two opening portions 10. However, the power fitting portion 7 and the signal fitting portion 8 may be inserted into one opening portion 10.

The motor case 2 and the cover 9 are formed in a rectangular shape having substantially the same shape and substantially the same dimensions when viewed from the axial direction O. The electronic circuit substrate 5 and the connector 6 are formed in a rectangular shape having dimensions smaller than that of the motor case 2 and the cover 9 when viewed from the axial direction O.

The connector 6 has four connector through-holes 19A that pass through the base portion in the axial direction O. The four connector through-holes 19A are disposed in the vicinity of each corner of the base portion of the connector 6. The electronic circuit substrate 5 has four substrate through-holes 19B that pass through the electronic circuit substrate 5 in the axial direction O. Each of the four substrate through-holes 19B are disposed in the vicinity of each corner of the electronic circuit substrate 5.

The motor case 2 includes a plurality of attachment portions 26. Each of the attachment portions 26 has a screw hole 18. The attachment portion 26 in the present embodiment has a columnar shape, and the screw hole 18 is formed on an upper surface thereof. The attachment portion 26 is disposed at positions corresponding to the connector through-hole 19A of the connector 6 and the substrate through-hole 19B of the electronic circuit substrate 5 when viewed from the axial direction O. A plurality of screws 12 pass through the connector through-hole 19A and the substrate through-hole 19B and are screwed into the screw holes 18, whereby the connector 6 and the electronic circuit substrate 5 are fixed to the motor case 2.

The electronic circuit substrate 5 includes the motor drive circuit 3 and the motor control circuit 4. A plurality of semiconductor switching elements that control a current of the electric motor 1 are mounted on the motor drive circuit 3. A microcomputer that generates a drive signal for driving the semiconductor switching elements is mounted on the motor control circuit 4.

As described above, the motor control apparatus 24 according to Embodiment 1 includes the electric motor 1 and the control device 25 integrated with the electric motor 1 that controls driving of the electric motor 1. The control device 25 includes the conductive motor case 2, the electronic circuit substrate 5, the connector 6, and the conductive cover 9. The motor case 2 includes the attachment portion 26 that fixes the motor case 2 to the electronic circuit substrate 5 and the connector 6. The electronic circuit substrate 5 includes the motor drive circuit 3 on which a plurality of semiconductor switching elements controlling a current of the electric motor 1 are mounted, and the motor control circuit 4 on which a microcomputer generating a drive signal for driving the semiconductor switching elements is mounted. The connector 6 is electrically connected to an external device and includes the power fitting portion 7 and the signal fitting portion 8 that are fitted to the external device. The cover 9 is attached to the motor case 2 to cover the electronic circuit substrate 5. The power fitting portion 7 and the signal fitting portion 8 are individually provided at different positions in the connector 6. At least one opening portion 10 through which the power fitting portion 7 and the signal fitting portion 8 can be inserted is provided in the cover 9. The first waterproof member 11A is provided between the motor case 2 and the cover 9. The second waterproof member 11B is provided between a portion of the cover 9 surrounding the opening portion 10 and the connector 6. In a state in which the cover 9 is attached to the motor case 2 via the first waterproof member 11A and the second waterproof member 11B, the electronic circuit substrate 5 and the connector 6 are disposed in a sealed space defined by the cover 9, the first waterproof member 11A, the second waterproof member 11B, and the motor case 2.

With this configuration, it is possible to provide a degree of freedom in disposition of the power fitting portion 7 and the signal fitting portion 8 of the connector 6. Accordingly, since restriction on dimensions of the control device 25 is mitigated, it is possible to design the control device 25 to flexibly respond to the restriction on the disposition of the control device 25 in the vehicle. Further, by disposing the waterproof members 11A and 11B between the connector 6 and the cover 9, it is possible to provide the motor control apparatus 24 with a high waterproof function.

### (Embodiment 2)

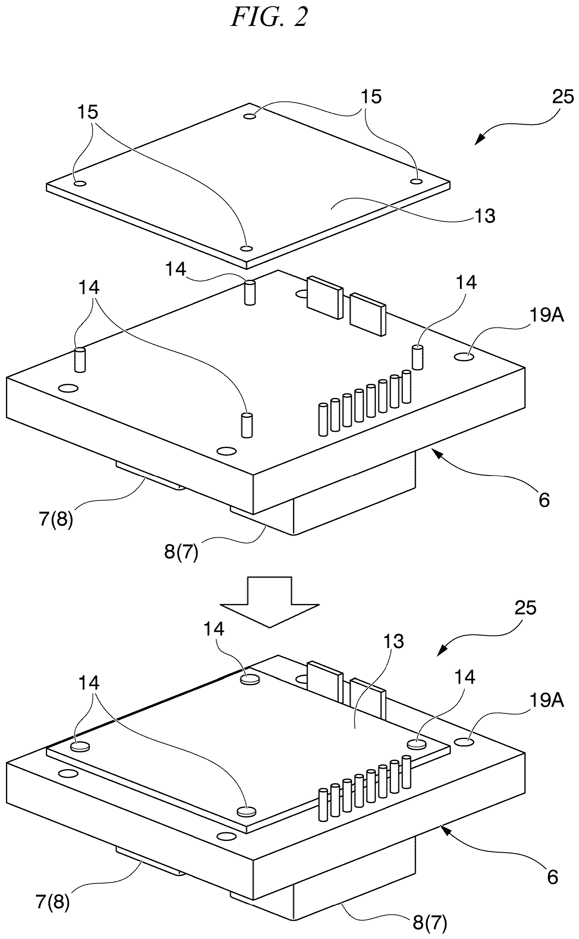

FIG. 2 is an assembly diagram showing a motor control apparatus 24 according to Embodiment 2 of the present disclosure. FIG. 8 is an external view showing the motor control apparatus 24 of Embodiment 2. Since the basic structure of the motor control apparatus 24 of Embodiment 2 is the same as that of Embodiment 1, different points will be mainly described. In the present embodiment, the following structure is further provided as compared with the motor control apparatus 24 of Embodiment 1.

As shown in FIG. 2, a control device 25 according to the present embodiment includes a shielding member 13 that shields electromagnetic waves. The shielding member 13 has a plurality of caulking holes 15. The connector 6 includes a plurality of caulking protrusions 14. The caulking protrusions 14 are provided on a surface of the base portion of the connector 6 facing the electronic circuit substrate 5. By thermally caulking the caulking protrusions 14 inserted into the caulking holes 15, the shielding member 13 is fixed to the connector 6.

The shielding member 13 is formed in a plate shape and is formed in a rectangular shape when viewed from the axial direction O. The shielding member 13 is provided between the electronic circuit substrate 5 and the connector 6 in the axial direction O. The caulking holes 15 are disposed in the vicinity of each corner of the shielding member 13 when viewed from the axial direction O. The caulking holes 15 pass through the shielding member 13 in the axial direction O.

As described above, in the motor control apparatus 24 of Embodiment 2, the control device 25 includes the shielding member 13 that shields electromagnetic waves. The caulking holes 15 are formed in the shielding member 13. The connector 6 is provided on a surface facing the electronic circuit substrate 5 and includes the caulking protrusions 14 that are inserted into the caulking holes 15. The caulking holes 15 and the caulking protrusions 14 are fixed by thermal caulking. With this configuration, it is possible to suppress electromagnetic waves generated from the motor control apparatus 24 from passing through the opening portion 10 of the cover 9 and being radiated to the outside. In addition, it is possible to suppress occurrence of malfunction of the electronic circuit due to electromagnetic waves from the outside passing through the opening portion 10 of the cover 9. That is, the electromagnetic waves are shielded by the shielding member 13, and radioactive and conductive electromagnetic interference can be suppressed, and noise interference of radio, audio, and the like for in-vehicle use can be suppressed.

### (Embodiment 3)

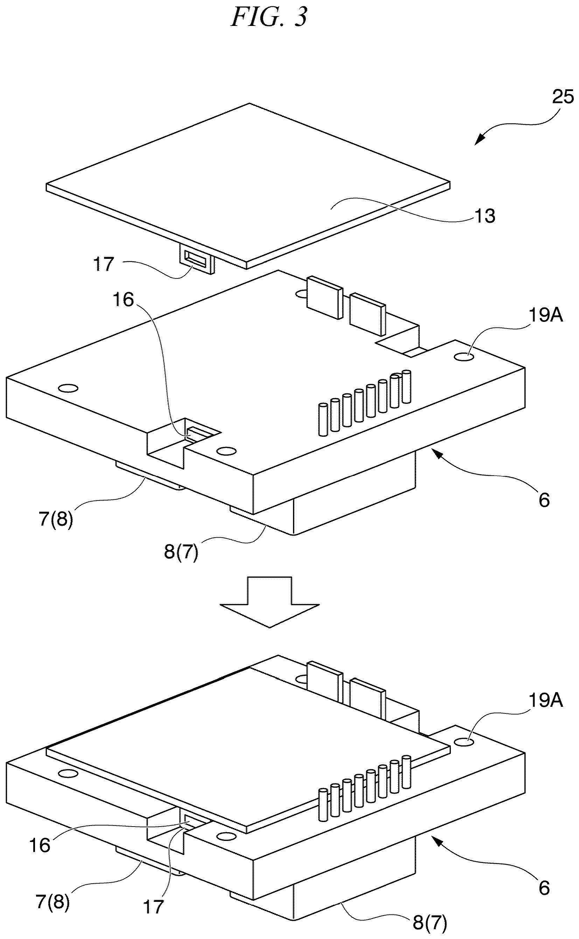

FIG. 3 is an assembly diagram showing a motor control apparatus 24 according to Embodiment 3 of the present disclosure. FIG. 8 is an external view showing the motor control apparatus 24 of Embodiment 3. Since the basic structure of the motor control apparatus 24 of Embodiment 3 is the same as that of Embodiment 1, the different points will be mainly described. In the present embodiment, the following structure is further provided as compared with the motor control apparatus 24 of Embodiment 1.

As shown in FIG. 3, the control device 25 according to Embodiment 3 includes a shielding member 13 that shields electromagnetic waves. The shielding member 13 is formed in a plate shape and is formed in a rectangular shape when viewed from the axial direction O. The shielding member 13 is provided between the electronic circuit substrate 5 and the connector 6 in the axial direction O. The shielding member 13 includes at least one snap-fit hole portion 17. In Embodiment 3, the shielding member 13 includes two snap-fit hole portions 17. The snap-fit hole portions 17 pass through two wall portions protruding toward the connector 6 side from two parallel sides among four sides of the shielding member 13.

The connector 6 includes the same number of snap-fit convex portions 16 as in the snap-fit hole portions 17. One snap-fit convex portion 16 is disposed in the vicinity of one of four sides of the base portion of the connector 6. More specifically, the snap-fit convex portion 16 is positioned inside a recess formed in the base portion of the connector 6 and protrudes in a lateral direction (a direction orthogonal to the axial direction O).

The shielding member 13 is fixed to the connector 6 by the snap-fit convex portions 16 that are fitted into the snap-fit hole portions 17 and hooked.

As described above, in the motor control apparatus 24 of Embodiment 3, the control device 25 includes the shielding member 13 that shields electromagnetic waves, and the snap-fit hole portions 17 are formed in the shielding member 13. The connector 6 includes the snap-fit convex portions 16. The snap-fit convex portions 16 are fitted into the snap-fit hole portions 17 and are hooked to the snap-fit hole portions 17, whereby the shielding member 13 is fixed to the connector 6. According to this configuration, the shielding member 13 and the connector 6 can be easily fixed. Therefore, for example, there is an advantage that equipment for performing thermal caulking is not required.

### (Embodiment 4)

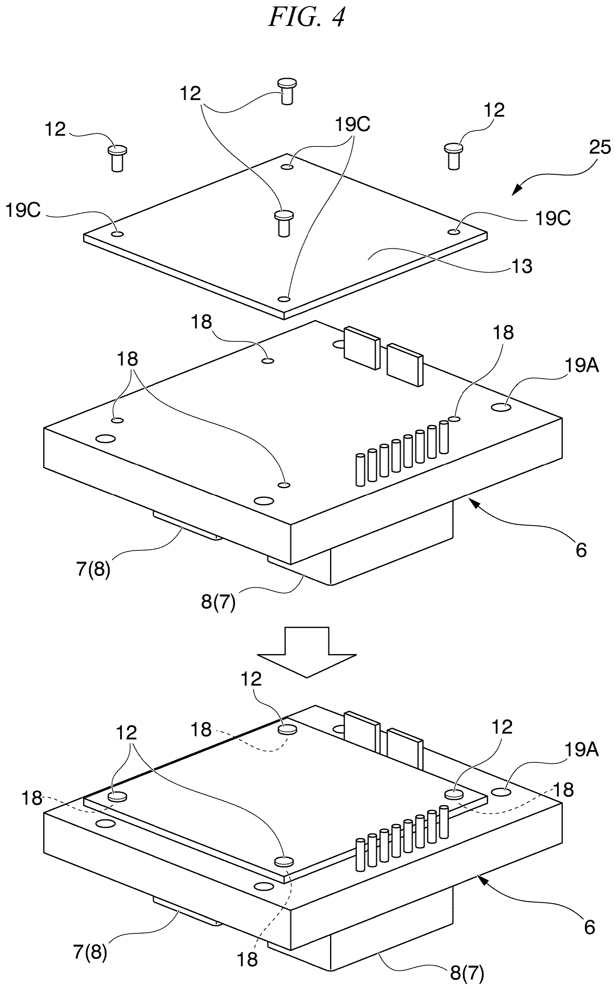

FIG. 4 is an assembly diagram showing a motor control apparatus 24 according to Embodiment 4 of the present disclosure. FIG. 8 is an external view showing a motor control apparatus 24 of Embodiment 4. Since the basic structure of the motor control apparatus 24 of Embodiment 4 is the same as that of Embodiment 1, the different points will be mainly described. In Embodiment 4, the following structure is further provided as compared with the motor control apparatus 24 according to Embodiment 1.

As shown in FIG. 4, the control device 25 according to the present embodiment includes a shielding member 13 that shields electromagnetic waves. The shielding member 13 has a plurality of shield through-holes 19C. The shield through-holes 19C are disposed in the vicinity of each corner of the shielding member 13 and pass through the shielding member 13 in the axial direction O.

The connector 6 has a plurality of screw holes 18. The screw hole 18 is provided in a surface of the base portion of the connector 6 that faces the electronic circuit substrate 5. A plurality of screws 12 pass through the shield through-holes 19C and are screwed into the screw hole 18. As a result, the shielding member 13 is fixed to the connector 6.

As described above, in the motor control apparatus 24 of Embodiment 4, the control device 24 includes the screws 12 and the shielding member 13 that shields electromagnetic waves. The shield through-holes 19C are formed in the shielding member 13. The connector 6 has the screw holes 18 provided in a surface facing the electronic circuit substrate 5. The screws 12 are inserted into the shield through-holes and are screwed into the screw holes 18, whereby the shielding member 13 is fixed to the connector 6. According to this configuration, the shielding member 13 and the connector 6 can be easily fixed. That is, there is an advantage that an existing mechanism for screwing can be used in a case of assembly.

### (Embodiment 5)

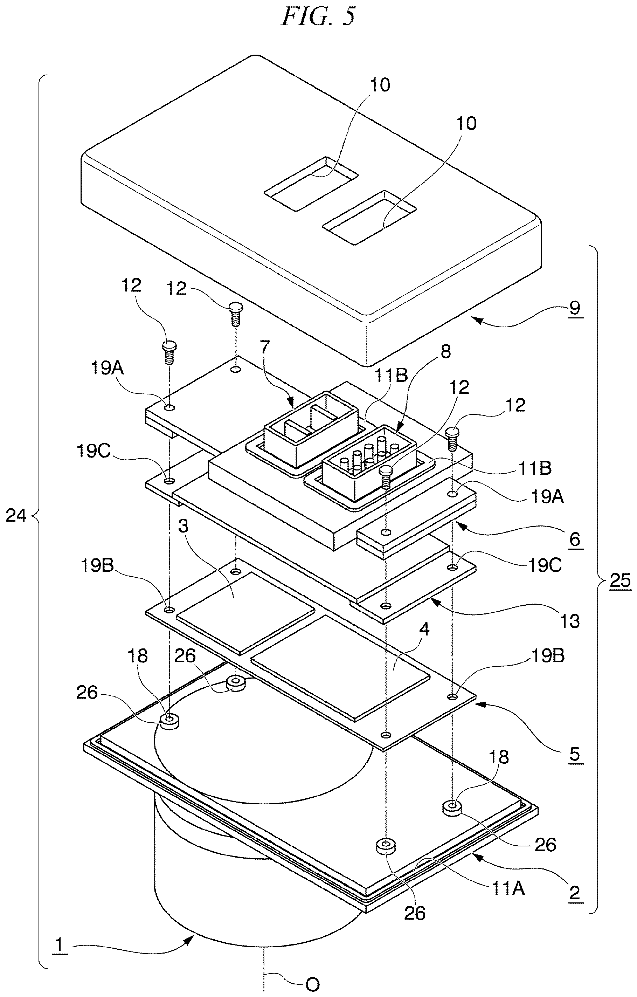

FIG. 5 is an exploded perspective view showing a motor control apparatus 24 according to Embodiment 5 of the present disclosure. FIG. 8 is an external view showing the motor control apparatus 24 of Embodiment 5. The motor control apparatus 24 according to Embodiment 5 further includes the following structure in the motor control apparatus 24 according to Embodiment 2 to Embodiment 4.

The control device 25 includes a screw 12. The shielding member 13 has a shield through-hole 19C. The connector 6 has a connector through-hole 19A. The motor case 2 has a screw hole 18 provided in a surface facing the electronic circuit substrate 5. The connector 6 and the shielding member 13 are fastened to the motor case 2 by the screw 12 that passes through the connector through-hole 19A and the shield through-hole 19C and is screwed into the screw hole 18.

The motor control apparatus 24 of Embodiment 5 can allow energy of an external noise or noise radio waves received by the shielding member 13 to flow to the motor case 2 and to be absorbed by the ground of a system (for example, a vehicle) on which the motor control apparatus 24 is mounted from the motor case 2. As a result, the effects described in Embodiment 2, that is, the effects of suppressing radioactive and conductive electromagnetic interference and suppressing noise interference of radios, audios, and the like for in-vehicle use can be further enhanced.

### (Embodiment 6)

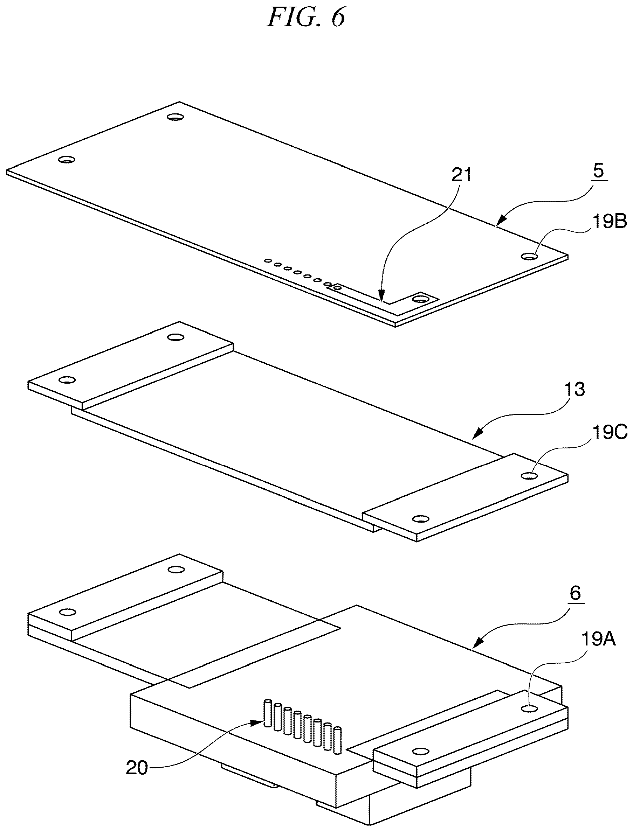

FIG. 6 is an exploded perspective view showing a motor control apparatus 24 according to Embodiment 6 of the present disclosure. FIG. 8 is an external view showing the motor control apparatus 24 of Embodiment 6. The motor control apparatus 24 of Embodiment 6 further includes the following structure in addition to the motor control apparatus 24 of Embodiment 5.

The control device 25 includes a ground lead 20 and a ground wiring line 21. The ground lead 20 is provided on the connector 6 and is electrically connectable to the ground of an external device. The ground wiring line 21 is provided on the electronic circuit substrate 5 and is electrically connected to the motor case 2. The ground lead 20 and the ground wiring line 21 are in contact with each other to have electrical conduction.

With the motor control apparatus 24 of Embodiment 5, energy of an external noise or noise radio waves received by the shielding member 13 can be absorbed by the ground of a system (for example, a vehicle) on which the motor control apparatus 24 is mounted via the ground wiring line 21 and the ground lead 20. As a result, in the system (for example, the vehicle) on which the motor case 2 is mounted, even in a case where the motor case 2 cannot be connected to the ground of the vehicle, the effects described in Embodiment 5 of the motor control apparatus 24, that is, the effects of suppressing radioactive and conductive electromagnetic interference and suppressing noise interference of radio, audio, and the like for in-vehicle use can be obtained via the ground lead 20.

### (Embodiment 7)

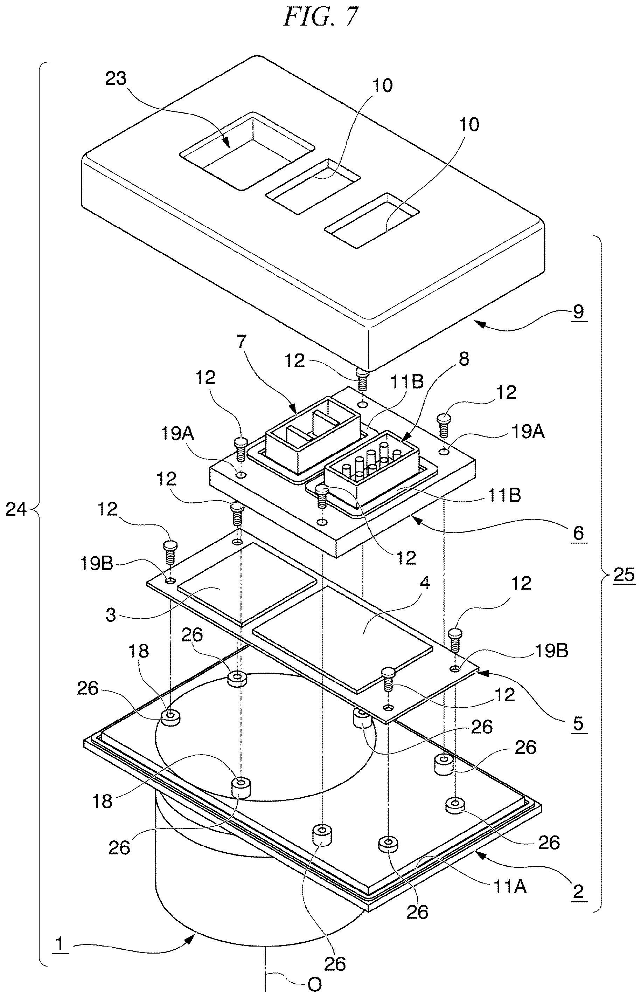

FIG. 7 is an exploded perspective view showing a motor control apparatus 24 according to Embodiment 7 of the present disclosure. FIG. 8 is an external view showing the motor control apparatus 24 of Embodiment 7. The motor control apparatus 24 of Embodiment 7 further includes the following structure in the motor control apparatus 24 of Embodiments 1 to 6.

The control device 25 further includes a heat dissipation member 22 that is disposed between the motor drive circuit 3 and the cover 9, and dissipates heat generated by the motor drive circuit 3. The cover 9 includes a heat dissipation convex portion 23 that protrudes toward the electronic circuit substrate 5 and is in contact with the heat dissipation member 22.

The motor control apparatus 24 of Embodiment 7 can transfer heat generated by heat generation of the motor drive circuit 3 to the cover 9 and transfer the heat from the cover 9 to the motor case 2. Accordingly, it is possible to lower a temperature of the motor drive circuit 3, and it is possible to improve performance (for example, an operable temperature or an operating current) and the life of the motor control apparatus 24.

### (Embodiment 8)

Next, Embodiment 8 related to the electric power steering device and the vehicle will be described. The motor control apparatuss 24 of Embodiment 1 to Embodiment 7 of the present disclosure can be used in an electric power steering device mounted on a vehicle. The electric power steering device includes the motor control apparatus 24 according to any one of Embodiments 1 to 7. The vehicle includes wheels and the electric power steering device, and the motor control apparatus 24 is disposed in the vicinity of the wheels.

In general, in a case where the motor control apparatus is disposed in the vicinity of the wheels as in the case of a rack assist type electric power steering device, water is likely to intrude into the motor control apparatus from the outside of the vehicle. On the other hand, with the electric power steering device or vehicle of Embodiment 8, it is possible to suppress a failure caused by intrusion of water into the motor control apparatus 24 based on the waterproof performance provided in the motor control apparatus 24 of Embodiment 1 to Embodiment 7. Therefore, it is possible to suppress occurrence of the failure in the electric power steering device and the vehicle.

The technical scope of the present disclosure is not limited to the embodiments described above, and various modifications can be made within a range not departing from the gist of the present disclosure.

In addition, it is possible to appropriately substitute the components in the above-described embodiments with known components within a range not departing from the gist of the present disclosure, and the above-described embodiments and modification examples may appropriately be combined.

### Reference Signs List

1 Electric motor
2 Motor case
3 Motor drive circuit
4 Motor control circuit
5 Electronic circuit substrate
6 Connector
7 Power fitting portion
8 Signal fitting portion
9 Cover
10 Opening portion
11A First waterproof member
11B Second waterproof member
12 Screw
13 Shielding member
14 Caulking protrusion
15 Caulking hole
16 Snap-fit convex portion
17 Snap-fit hole portion
18 Screw hole
19A Connector through-hole
19B Substrate through-hole
19C Shield through-hole
20 Ground lead
21 Ground wiring line
22 Heat dissipation member
23 Heat dissipation convex portion
24 Motor control apparatus
25 Control device
26 Attachment portion

## Claims

1. A motor control apparatus comprising:
an electric motor;
a control device configured to control driving of the electric motor and is integrated with the electric motor,
wherein the control device includes a conductive motor case, an electronic circuit substrate, a connector, and a conductive cover,
the motor case includes an attachment portion configured to fix the motor case to the electronic circuit substrate and the connector,
the electronic circuit substrate includes
a motor drive circuit on which a plurality of semiconductor switching elements configured to control a current of the electric motor are mounted, and
a motor control circuit on which a microcomputer configured to generate a drive signal for driving the semiconductor switching elements is mounted,
the connector is electrically connected to an external device and includes a power fitting portion and a signal fitting portion that are fitted to the external device,
the cover is attached to the motor case to cover the electronic circuit substrate,
the power fitting portion and the signal fitting portion are individually provided at different positions on the connector,
at least one opening portion through which the power fitting portion and the signal fitting portion are insertable is provided in the cover,
a first waterproof member is provided between the motor case and the cover,
a second waterproof member is provided between a portion of the cover surrounding the opening portion and the connector, and
the electronic circuit substrate and the connector are disposed in a sealed space defined by the cover, the first waterproof member, the second waterproof member, and the motor case in a state in which the cover is attached to the motor case via the first waterproof member and the second waterproof member.

2. The motor control apparatus according to Claim 1,
wherein the control device includes a shielding member configured to shield electromagnetic waves,
a caulking hole is formed in the shielding member,
the connector is provided on a surface facing the electronic circuit substrate and includes a caulking protrusion inserted into the caulking hole, and
the caulking hole and the caulking protrusion are fixed by thermal caulking.

3. The motor control apparatus according to Claim 1,
wherein the control device includes a shielding member configured to shield electromagnetic waves,
a snap-fit hole portion is formed in the shielding member,
the connector includes a snap-fit convex portion, and
the snap-fit convex portion is fitted into the snap-fit hole portion and is hooked to the snap-fit hole portion to fix the shielding member to the connector.

4. The motor control apparatus according to Claim 1,
wherein the control device includes a screw and a shielding member configured to shield electromagnetic waves,
a shield through-hole is formed in the shielding member,
the connector has a screw hole provided in a surface facing the electronic circuit substrate, and
the screw is inserted into the shield through-hole and is screwed into the screw hole to fix the shielding member to the connector.

5. The motor control apparatus according to any one of Claims 2 to 4,
wherein the control device includes a screw,
the shielding member has a shield through-hole,
the connector has a connector through-hole,
the motor case has a screw hole provided in the surface facing the electronic circuit substrate, and
the screw passes through the shield through-hole and the connector through-hole and is screwed into the screw hole to fasten the connector and the shielding member to the motor case.

6. The motor control apparatus according to Claim 5,
wherein the control device includes
a ground lead that is provided on the connector and is electrically connectable to a ground of the external device, and
a ground wiring line that is provided on the electronic circuit substrate and is electrically connected to the motor case, and
the ground lead and the ground wiring line are in contact with each other to have electrical conduction.

7. The motor control apparatus according to any one of Claims 1 to 6,
wherein the control device includes a heat dissipation member that is disposed between the motor drive circuit and the cover, and dissipates heat generated in the motor drive circuit, and
the cover includes a heat dissipation convex portion that protrudes toward the electronic circuit substrate and is in contact with the heat dissipation member.

8. An electric power steering device comprising:
the motor control apparatus according to any one of Claims 1 to 7.

9. A vehicle comprising:
a wheel; and
the electric power steering device according to Claim 8,
wherein the motor control apparatus of the electric power steering device is disposed in a vicinity of the wheel.

## Amended claims

### Amended claims under Art. 19.1 PCT

1. A motor control apparatus (24) comprising:
an electric motor (1);
a control device (25) configured to control driving of the electric motor (1) and is integrated with the electric motor (1),
wherein the control device (25) includes a conductive motor case (2), an electronic circuit substrate (5), a connector (6), a conductive cover (9), and a shielding member (13) configured to shield electromagnetic waves,
the motor case (2) includes an attachment portion (26) configured to fix the motor case (2) to the electronic circuit substrate (5) and the connector (6),
the electronic circuit substrate (5) includes
a motor drive circuit (3) on which a plurality of semiconductor switching elements configured to control a current of the electric motor (1) are mounted, and
a motor control circuit (4) on which a microcomputer configured to generate a drive signal for driving the semiconductor switching elements is mounted,
the connector (6) is electrically connected to an external device and includes a power fitting portion (7) and a signal fitting portion (8) that are fitted to the external device,
the cover (9) is attached to the motor case (2) to cover the electronic circuit substrate (5),
the power fitting portion (7) and the signal fitting portion (8) are individually provided at different positions on the connector (6),
at least one opening portion (10) through which the power fitting portion (7) and the signal fitting portion (8) are insertable is provided in the cover (9),
a first waterproof member (11A) is provided between the motor case (2) and the cover (9),
a second waterproof member (11B) is provided between a portion of the cover (9) surrounding the opening portion (10) and the connector (6),
the electronic circuit substrate (5) and the connector (6) are disposed in a sealed space defined by the cover (9), the first waterproof member (11A), the second waterproof member (11B), and the motor case (2) in a state in which the cover (9) is attached to the motor case (2) via the first waterproof member (11A) and the second waterproof member (11B), and
the shielding member (13) is fixed to the connector (6).

2. The motor control apparatus (24) according to Claim 1,
wherein a caulking hole (15) is formed in the shielding member (13),
the connector (6) is provided on a surface facing the electronic circuit substrate (5) and includes a caulking protrusion (14) inserted into the caulking hole (15), and
the caulking hole (15) and the caulking protrusion (14) are fixed by thermal caulking.

3. The motor control apparatus (24) according to Claim 1,
wherein a snap-fit hole portion (17) is formed in the shielding member (13),
the connector (6) includes a snap-fit convex portion (16), and
the snap-fit convex portion (16) is fitted into the snap-fit hole portion (17) and is hooked to the snap-fit hole portion (17) to fix the shielding member (13) to the connector (6).

4. The motor control apparatus (24) according to Claim 1,
wherein the control device (25) includes a screw (12),
a shield through-hole (19C) is formed in the shielding member (13),
the connector (6) has a screw hole (18) provided in a surface facing the electronic circuit substrate (5), and
the screw (12) is inserted into the shield through-hole (19C) and is screwed into the screw hole (18) to fix the shielding member (13) to the connector (6).

5. The motor control apparatus (24) according to Claim 1,
wherein the control device (25) includes a screw (12),
the shielding member (13) has a shield through-hole (19C),
the connector (6) has a connector through-hole (19A),
the motor case (2) has a screw hole (18) provided in the surface facing the electronic circuit substrate (5), and
the screw (12) passes through the shield through-hole (19C) and the connector through-hole (19A) and is screwed into the screw hole (18) to fasten the connector (6) and the shielding member (13) to the motor case (2).

6. The motor control apparatus (24) according to Claim 5,
wherein the control device (25) includes
a ground lead (20) that is provided on the connector (6) and is electrically connectable to a ground of the external device, and
a ground wiring line (21) that is provided on the electronic circuit substrate (5) and is electrically connected to the motor case (2), and
the ground lead (20) and the ground wiring line (21) are in contact with each other to have electrical conduction.

7. The motor control apparatus (24) according to any one of Claims 1 to 6,
wherein the control device (25) includes a heat dissipation member (22) that is disposed between the motor drive circuit (3) and the cover (9), and dissipates heat generated in the motor drive circuit (3), and
the cover (9) includes a heat dissipation convex portion (23) that protrudes toward the electronic circuit substrate (5) and is in contact with the heat dissipation member (22).

8. An electric power steering device comprising:
the motor control apparatus (24) according to any one of Claims 1 to 7.

9. A vehicle comprising:
a wheel; and
the electric power steering device according to Claim 8,
wherein the motor control apparatus (24) of the electric power steering device is disposed in a vicinity of the wheel.

## Amended claims

### Amended claims under Art. 19.1 PCT

International Application No. : PCT/JP2023/ 21660
International Filing Date: 12. 6. 2023 (12 June 2023)
Applicant: Mitsubishi Electric Corporation
Applicant's address: 7-3, Marunouchi 2-chome, Chiyoda-ku, Tokyo 100-8310 Japan
Agents: NISHIZAWA Kazuyoshi
Agent's Addresses: 1-9-2, Marunouchi, Chiyoda-ku, Tokyo 100-6620 Japan
Agent's Phone No.: +81 3 5288-5811
Agent's Fax No. : +81 3 5288-5831
Applicant's or Agent's File reference: 685714WO01

Dear Sir/Madam:
The applicant, who received the International Search Report relating to the above-identified International Application transmitted on 29 August 2023, hereby files amendment under Article 19(1) as in the attached sheets.

We hereby would like to amend Claims 1-4. The amendments to Claim 1 is based on the description of paragraph [0030] of the originally filed specification and Claims 24 of the original filed claims. Claims 5-9 are retained unchanged.

The applicant also files as attached herewith a brief statement including explanations of the amendment and arguments regarding the novelty and inventive steps of the amended claims.

Very truly yours,

/NISHIZAW A Kazuyoshi/

Patent Attorney

Attachment:
Amendment under Article 19(1) 3 sheets
Brief Statement 1 sheet
